# EUROPÄISCHE PATENTSCHRIFT

(11) **EP 2 093 093 B1**
(45) Veröffentlichungstag und Bekanntmachung des Hinweises auf die Patenterteilung: **17.10.2012**
(21) Anmeldenummer: 08022364.7
(22) Anmeldetag: 23.12.2008
(51) Int. Cl.: B60K 28/06

(54) **Verfahren und Vorrichtung zur Erkennung fehlender Fahreraktivität am Lenkrad**
Method and device for detecting an absence of driver activity at the steering wheel
Procédé et dispositif de reconnaissance d'une activité de conducteur manquante sur le volant

(30) Priorität: 25.02.2008 DE 102008010840; 28.04.2008 DE 102008021150
(43) Veröffentlichungstag der Anmeldung: 26.08.2009
(73) Patentinhaber: Volkswagen Aktiengesellschaft, 38440 Wolfsburg (DE)
(72) Erfinder: Klauske, Lars-Kristian, 12169 Berlin (DE); Müller, Jürgen, 13158 Berlin (DE); Rohlfs, Michael, Dr., 38531 Rötgesbüttel (DE)
(74) Vertreter: Meyer, Enno

(56) Entgegenhaltungen:
- EP-A1- 1 645 454
- EP-A2- 1 209 019
- DE-A1- 4 230 481
- FR-A1- 2 890 632
- JP-A- 11 245 836
- US-A1- 2003 011 481

## Beschreibung

Die Erfindung betrifft ein Verfahren zur Erkennung fehlender Fahreraktivität am Lenkrad eines Kraftfahrzeugs gemäß Anspruch 1 sowie eine entsprechende Vorrichtung gemäß Anspruch 9.

Zur Erhöhung der Sicherheit beim Betrieb eines Kraftfahrzeugs im Straßenverkehr kommen zunehmend Fahrerassistenzsysteme zum Einsatz, die auf die Erhöhung der Fahrsicherheit gerichtet sind. Derartige Assistenzsysteme unterstützen den Fahrer oder können gegebenenfalls in Notfallsituationen anstelle des Fahrers handeln. Ein derzeit in Verbreitung befindliches System ist das ADR-System (Automatische Distanzregelung), auch unter der Abkürzung ACC (Automatic Cruise Control) bekannt, bei dem sowohl eine Geschwindigkeitsregelung als auch eine Abstandsregelung miteinander verknüpft sind. Weiter sind Spurhaltesysteme (Heading Control) geläufig, bei denen mittels einer entsprechenden Sensorik die Fahrspur erkannt und das System durch entsprechend erzwungene Lenkvorgänge versucht, das Fahrzeug auf der Fahrspur zu halten. Derartige Systeme setzen eine elektromotorisch unterstützte Lenkung voraus. Ferner sind Kombinationen aus den genannten System in der Entwicklung.

Um nun eine weitere Verbesserung der aktiven Sicherheit zu bewirken, ist es notwendig Informationen über den Fahrer hinsichtlich seiner Reaktionsfähigkeit zu erlangen, da bei einem übermüdeten Fahrer auch die oben genannten Fahrerassistenzsysteme versagen. Eine Überwachung des Fahrers und eine anschließende Beurteilung seines Zustandes sind auf verschiedenen Weise möglich. Beispielsweise kann das Lenk- und/oder Beschleunigungs-/Bremsverhalten des Fahrers überwacht und ausgewertet werden. Eine grundlegende Frage bei der Überwachung der Fahreraktivität ist , ob der Fahrer während der Fahrt überhaupt das Lenkrad erfasst hat oder nicht. Hat dieser das Lenkrad nicht erfasst, so liegt die Vermutung nahe, dass der Fahrer sich in einem Zustand verringerter Aufmerksamkeit befindet und dass Maßnahmen, beispielsweise in Form einer Warnung, ergriffen werden müssen.

Aus der DE 10 2005 056 438 A1 ist eine Verfahren zur Klärung der Frage, ob der Fahrer eines Kraftfahrzeugs das Lenkrad ergriffen hat oder nicht, zu entnehmen, bei dem solche Parameter des Lenkrades gemessen , die das Systemverhalten des Lenkrades bestimmen und diese Parameter ausgewertet werden. Die ausgewerteten Parameter werden anschließend mit Referenzparametern verglichen, wobei die Referenzparameter entweder die Situation wiedergeben, in welche der Fahrer das Lenkrad festhält oder in welcher der Fahrer das Lenkrad nicht ergriffen hat. Ist die Abweichung zwischen ausgewerteten Parametern und Referenzparameter größer als eine vorgegebene Schwelle, so wird eine Warnung, d.h. ein Alarm, ausgelöst.

Weiterhin ist aus der DE 198 06 458 A1 eine Kraftfahrzeuglenkvorrichtung mit einer Freihandfahrt-Erkennungsvorrichtung bekannt, bei der die freihändige Fahrt auf der Basis von wenigstens der Fahrzeuggeschwindigkeit und dem Lenkdrehmoment erkannt wird. Dabei wird die Fahrt als freihändig bewertet, wenn die Fahrzeuggeschwindigkeit größer als ein vorbestimmter Geschwindigkeitswert und das gemessene Lenkmoment kleiner als eine vorgegebene Schwelle sind.

Das Dokument EP 1 645 454 A1 beschreibt eine Vorrichtung zur Bestimmung der Fahreraktivität am Lenkrad, wobei die Vorrichtung einen ersten Sensor zur Bestimmung des Lenkwinkels, einen zweiten Sensor zur Bestimmung des auf das Lenkrad ausgeübten Gesamtmoments und eine Steuereinrichtung aufweist. Dabei erzeugt die Steuereinrichtung aus dem Gesamtmoment ein Handlenkmoment des Fahrers und dessen Ableitung, vergleicht das Handlenkmoment und dessen Ableitung mit jeweiligen Schwellwerten und erzeugt ein Signal, wenn sowohl das Handlenkmoment als auch dessen Ableitung für eine vorgegebenen Zeitspanne unterhalb der Schwellwerte liegen.

Das Dokument DE 42 30 481 A1 offenbart ein Verfahren zur Kuvenfahrterkennung, das insbesondere für Kraftfahrzeuge mit ABS oder ASR vorgesehen ist. Dabei werden die Drehgeschwindigkeiten der beiden Räder einer nicht angetriebenen Achse gemessen und fortlaufend eine Korrekturgröße für den Unterschied des Reifen-Abrollumfangs der beiden Räder ermittelt. Es wird eine die Geradeausfahrt wiedergebende Bezugsgröße gebildet und diese Bezugsgröße in Abhängigkeit von der Geschwindigkeitsdifferenz der beiden Räder nach einem vorgegebenen Zeitschema fortlaufend korrigiert.

Die Druckschrift EP 1 209 019 A2 beschreibt ein Verfahren zur Detektion des Aktivitätszustands eines Fahrers eines Kraftfahrzeugs basierend auf dem lateralen Versatz des Fahrzeugs während der Fahrt. Die laterale Versetzung kann beispielsweise durch eine Stereokamera oder eine Monokamera festgestellt werden, die linke und rechte Fahrbahnmarkerungen überwachen. Die lateralen Versatzdaten eines vorgegebenen Zeitintervalls werden einer Fouriertransformation unterzogen und das Leistungsspektrum der auftretenden Frequenzkomponenten wird für vorgegebene Frequenzintervalle ermittelt; wobei das Leistungsspektrum auf vorgegebene Charakteristiken untersucht wird. Aus dem Leistungsspektrum wird ein Erwartungswert abgeleitet, enhand dem ein momentaner Aktivitätszustand des Fahrers bestimmt wird. Nachteilig bei den bekannten Verfahren bzw, Vorrichtungen ist, dass eine überflüssige Warnung ausgelöst werden kann, wenn der Fahrer beabslchtigterweise kurzzeitig beide Hände vom Lenkrad genommen hat. Überflüssige Warnungen bewirken ein Herabsetzen der Akzeptanz eines derartigen Systems.

Der Erfindung liegt daher die Aufgabe zugrunde, ein Verfahren sowie eine Vorrichtung zur Erkennung fehlender Fahreraktivität am Lenkrad eines Kraftfahrzeugs zu schaffen, wodurch die Anzahl nicht gerechtfertigter Warnungen an den Fahrer verringert wird.

Die Aufgabe wird durch ein Verfahren mit den Merkmalen des Anspruchs 1 sowie durch eine Vorrichtung mit den Merkmalen des Anspruchs 9 gelöst. Bevorzugte Ausgestaltungen des Verfahrens sind Gegenstand der Unteransprüche.

Das erfindungsgemäße Verfahren zur Erkennung fehlender Fahreraktivität am Lenkrad eines Kraftfahrzeugs, wobei das am Lenkrad ausgeübte Handmoment des Fahrers gemessen wird, ist getaktet ist und weist innerhalb eines Taktes vorgegebener Zyklusdauer die folgenden Schritte auf:
- Bestimmen mindestens einer Handmomentgröße aus dem gemessenen Handmoment,
- Herunterzählen eines Zählers um eine vorgegebene erste Schrittweite ausgehend von dem Zählerwert des vorherigen Taktes, wenn die mindestens eine Handmomentgröße kleiner als eine vorgegebene erste Schwelle ist,
- Abspeichern des neuen Zählerwertes zur Verwendung im nächsten Takt,
- Vergleichen des neuen Zählerwertes mit einem Zählerschwellwert und Ausgeben einer Warnung, wenn der neue Zählerwert kleiner dem Zählerschwellwert ist, und
- Ausführen des nächsten Taktes, wenn der neue Zählerwert größer oder gleich dem Zählerschwellwert ist, wobei

der Zähler um eine zweite Schrittweite ausgehend von dem Zählerstand des vorherigen Taktes heraufgezählt wird, wenn die mindestens eine Handmomentgröße größer oder gleich der vorgegebenen Schwelle ist. Dabei wird weiter bevorzugte, dass die zweite Schrittweite eine Funktion der Handmomentgröße ist.

Mit anderen Worten, die der Erfindung zugrunde liegende Idee besteht darin eine Warnung auszulösen, wenn der Momentschwellwert länger als eine vorgegebene, aber variable Zeitdauer durch das ausgeübte Handmoment des Fahrers unterschritten wird. Dabei wird das Handmoment des Fahrers mit einer vorgegebenen Frequenz durchgeführt und ein Zähler abwärts gezählt, solange die Bedingung des Unterschreitens zutrifft. Trifft die Bedingung nicht zu, d.h. das gemessene Handmoment ist größer oder gleich dem Momentschwellwert, so wird der Zähler wieder nach oben gezählt, wobei die Schnelligkeit, mit welcher der Zähler wieder nach oben gezählt wird, eine Funktion des ausgeübten Handmoments ist. Eine Warnung des Fahrers erfolgt daher nur dann, wenn der Wert des Zählers eine vorbestimmte Schwelle unterschreitet, was erst nach einer gewissen Zeit erfolgen kann. Damit wird erreicht, dass das System flexibel auf Aktivitäten des Fahrers reagiert.

Insbesondere wird vorzugsweise die Handmomentgröße mit einer zweiten Schwelle verglichen, wobei die zweite Schrittweite einen größeren Wert annimmt, wenn die Handmomentgröße größer ist als die zweite Schwelle, und einen kleineren Wert annimmt, wenn die Handmomentgröße kleiner oder gleich der zweiten Schwelle ist.

In einer bevorzugten Ausführungsform beträgt die Zykluszeit ca. 0,2 Sekunden. Damit soll ausgedrückt werden, dass die Taktzeit oder Zyklusdauer in dem Bereich von einigen Zehntelsekunden bewegt, um in einem vernünftigen Zeitraum von einigen Sekunden eine Aussage über die Fahreraktivität zu erhalten.

Ferner ist vorzugsweise der Zählerwert durch eine obere Grenze begrenzt, wobei die erste und/oder zweite Schrittweite und/oder erste Schwelle und/oder obere Grenze des Zählerwerts situationsabhängig änderbar sind.

Unter dem Begriff Handmomentgröße wird hier einerseits das Handmoment des Fahrers selbst verstanden, d.h. dem Verfahren liegt die Auswertung des Handmoments des Fahrers zugrunde, andererseits wird darunter auch die zeitliche Ableitung des gemessenen Handmoments verstanden, was bedeutet, dass das Verfahren auf die Auswertung der zeitlichen Ableitung des Handmoments gerichtet ist. Das Verfahren kann auch kombiniert in dem Sinne sein, dass es auf die Betrachtung beider Handmomentgrößen gerichtet ist.

Daher wird vorzugsweise die Handmomentgröße durch das gemessene Handmoment und/oder dessen zeitliche Ableitung gebildet. Mit anderen Worten, in einer bevorzugten Ausführungsform wird das Handmoment des Fahrers innerhalb eines Taktes oder Zyklus betrachtet, während in dem anderen Fall die Regelung auf die zeitliche Ableitung des Handmoments gerichtet ist. Ferner ist es auch möglich, das Verfahren sowohl auf die Betrachtung des Handmoments als auch dessen Ableitung zu stützen, mit anderen Worten, das Verfahren eine Kombination der Auswertung des Handmoments und dessen Ableitung ist. Bei einer Betrachtung der Ableitung des Handmoments kann dieses vorzugsweise gefiltert werden, um eine Glättung des Signalverlaufs zu erreichen.

Eine erfindungsgemäße Vorrichtung zur Durchführung des im Vorangegangenen erläuterten Verfahrens weist mindestens einen Sensor zur Bestimmung des Lenkrad anliegenden Handmoments, eine Datenverarbeitungseinrichtung zur Durchführung des Verfahrens und eine Warneinrichtung auf.

Vorzugsweise wird die Warneinrichtung durch eine Anzeigeeinrichtung und/oder eine akustische Warneinrichtung gebildet. Ferner kann die Vorrichtung einen Sensor zur Bestimmung des Lenkradwinkels aufweisen.

Eine bevorzugte Ausführungsform der Erfindung wird nachfolgend anhand der Zeichnungen beschrieben. Dabei zeigt
- Fig. 1: ein Blockschaltbild der Vorrichtung zur Erkennung fehlender Fahreraktivität am Lenkrad, und
- Fig. 2: das Verfahren zur Erkennung fehlender Fahreraktivität am Lenkrad in schematischer Darstellung.

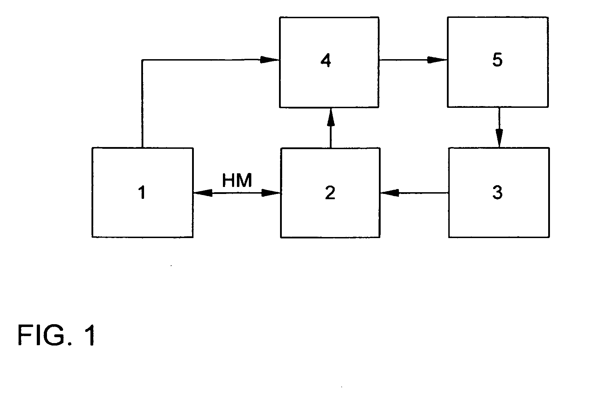

Fig. 1 zeigt ein Blockschaltbild einer Vorrichtung zur Erkennung fehlender Fahreraktivität, wie sie beispielsweise in einem Spurhalteassistenten auf Basis eines Lenkmomentsensors eingesetzt werden kann. Dargestellt ist eine elektromechanische Lenkung 1, die mit einem Lenkrad 2 verbunden ist. Ein Fahrer 3 übt aktive Lenkbewegungen auf das Lenkrad 2 aus, so dass das Handmoment HM des Fahrers 3 auf die elektromechanische Lenkung 1 wirkt. Ein nicht dargestellter Sensor misst das am Lenkrad 2 und damit an der elektromechanischen Lenkung 1 anliegende Handmoments HM des Fahrers, welches an ein Steuergerät 4 übertragen wird. Ein weiterer Sensor kann auch optional zusätzlich einen hochaufgelösten Lenkradwinkel messen und an das Steuergerät 4 übertragen. Im Steuergerät 4 wird ausgehend von dem gemessenen Handmoment des Fahrers das Verfahren zur Erkennung fehlender Fahreraktivität am Lenkrad durchgeführt. Wurde eine fehlende Fahreraktivität festgestellt, so triggert das Steuergerät eine Anzeige- oder Warneinrichtung 5, die eine optische und/oder akustische und/oder haptische Warnung an den Fahrer abgibt.

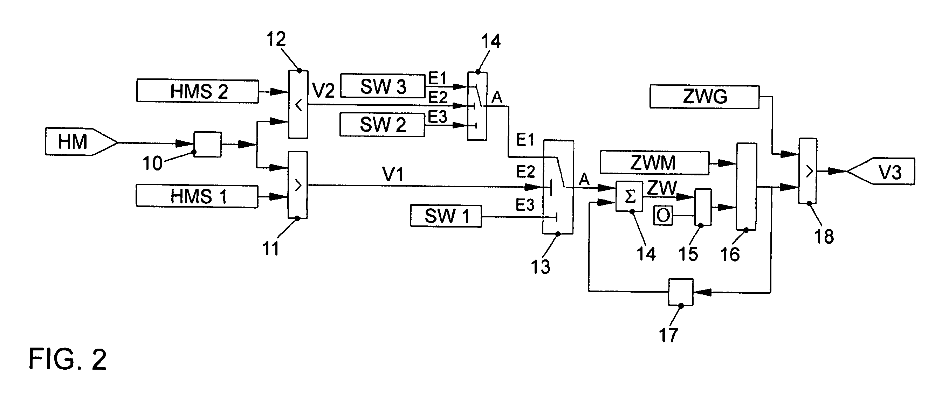

Fig. 2 zeigt in schematischer Darstellung das erfindungsgemäße Verfahren zur Erkennung fehlender oder mangelnder Fahreraktivität am Lenkrad, also zur Erkennung eines freien Lenkrades. Das gemessenes Handmoment HM des Fahrers des aktuellen Messtaktes wird als Eingangsgröße einem Betragsbildner 10 zugeführt, der den Betrag des Handmoments HM bildet. Der Betragswert des Handmoments HM wird in einem ersten Vergleicher 11 mit einer unteren ersten Schwelle HMS1 und in einem zweiten Vergleicher 12 mit einer oberen zweiten Schwelle HMS2 verglichen, wobei der erste Vergleicher 11 die boolsche Variable V1 und der zweite Vergleicher die boolsche Variable V2 ausgibt.

Ist der Vergleich im ersten Vergleicher 11 positiv, d.h. das gemessenen Handmoment HM ist größer als die erste Schwelle HMS1, so hat die boolsche Variable V1 des Vergleicher 11 den boolschen Wert "Eins". Ist hingegen der Vergleich negativ, d.h. der Betrag des gemessenen Handmoments HM ist kleiner oder gleich der ersten Schwelle HMS1, so hat die boolsche Variable V1 den Wert logisch "Null".

Die boolsche Variable V1 des Vergleichers 11 steuert den logischen Eingang E2 eines Schalters 13, der noch die weiteren die Eingänge E1 und E3 sowie den Ausgang A aufweist. Dabei wählt bei dem Vergleicher 11, wie auch bei den noch zu erläuternden Vergleichern 12 und 13, der Steuereingang E2 aus, welcher der beiden anderen Eingänge E1 und E3 auf den Ausgang a geschaltet wird. Ist daher E2 auf logisch "Eins", so wird der Eingang E1 auf den Ausgang A geschaltet, im anderen Fall der Eingang E3.

Ist daher der Vergleich im Vergleicher 11 negativ ausgefallen, d.h. der Betrag des gemessenen Handmoments HM kleiner oder gleich dem ersten Schwellwert HMS1, so hat die boolsche Variable V1 den Wert "Null", was dazu führt, dass der Schalter 13 die am Eingang E3 anliegenden erste Schrittweite SW1 auf den Ausgang A des Schalters 13 legt. In einer bevorzugten Ausführungsform hat die erste Schrittweite SW1 den Wert "-1". Falls schneller nach untern gezählt werden soll, kann eine größerer negative Zahl den Wert der ersten Schrittweite SW1 bilden.

Die so auf den Ausgang des Schalters 13 durchgeschaltete erste Schrittweite SW1 mit dem negativen Wert wird einem als Zähler wirkenden Addierer 14 zugeführt, auf dessen anderem Eingang der Zählerwert des vorherigen Taktes anliegt. Beträgt daher die erste Schrittweite "-1", so wird der Zähler oder Addierer 14 heruntergezählt. Der neue Zählerwert des aktuellen Messtaktes wird nun einem Maximumbildner 15 zugeführt, der das Maximum zwischen dem aktuellen Zählerwert und einer unteren Zählergrenze bestimmt, die hier den Wert "0" hat. Dadurch wird der aktuelle Zählerwert immer nach unten auf den Wert "0" begrenzt. Andere Werte als "0" für die Begrenzung des Zählerwertes nach unten beim Abwärtszählen sind natürlich denkbar. Solange daher der aktuelle Zählwert größer "0" ist, erscheint am Ausgang des Maximumbildners 15 der Zählerwert des aktuellen Taktes.

Der aktuelle Zählerwert wird anschließend durch einen Minimumbildner 16 nach oben begrenzt. In dem Minimumbildner wird das Minimum zwischen dem aktuellen Zählerwert und einer oberen Zählerwertgrenze ZWM bestimmt. Solange daher der Zählerwert ZW kleiner als die obere Grenze ZWM ist, wird der aktuelle Zählerwert ZW einem Vergleicher 18 zugeführt. In dem Vergleicher 18 wird der aktuelle Zählerstand mit einem Grenzwert ZWG verglichen. Ist der Vergleich negativ, d.h. der aktuelle Zahlerwert ist größer als der Zählergrenzwert SWG, so ist die aus dem Vergleich generierte boolsche Variable V3 "Null". Fällt der Vergleich im Vergleicher 18 jedoch positiv aus, d.h. der Zählerwert ZW unterschreitet den Grenzwert ZWG, so hat die boolsche Variable V3 den Wert "Eins". Dies signalisiert, das der Fahrer über einen längeren Zeitraum im wesentlichen keine Lenkaktivitäten zeigt und es wird basierend auf der boolschen Variablen V3 eine Warnung generiert.

Die obige Beschreibung behandelt den Fall, in dem der Fahrer über eine längeren Zeitraum keine Lenkativitäten zeigt, so dass von einer Hand-Off-Situation ausgegangen werden muss. Nun kann der Fahrer während des Abwärtszählens des Zählers wieder Lenkmomente auf das Lenkrad ausüben, was durch den oberen Teil des Verfahrens der Fig. 2 abgehandelt wird.

In dem Vergleicher 12 wird parallel zu dem Vergleicher 11 überprüft, ob eine zweite obere Schwelle HMS2 kleiner ist als der Betrag des gemessenen Handmoments des Fahrers. Trifft dies zu, so hat die Variable V2 den Wert "Eins" und der Schalter 14 schaltet die Schrittweite SW3 auf den Eingang E1 des Schalters 13. Trifft der Vergleich nicht zu, d.h. die zweite Schwelle ist größer als der betrag des Handmoments des Fahrers, so hat die boolsche Variable den Wert "Null", mit der Folge, dass die Schrittweite SW2 auf den Eingang E1 des Schalters 13 durchgeschaltet wird. Die Schrittweiten SW2 und SW3 sind positive ganze Zahlen mit der Eigenschaft, dass die Schrittweite SW3 größer ist als die Schrittweite SW2. Dies führt dazu, dass bei einem großen detektierten Handmoment der Zähler schneller aufwärts gezählt wird als bei einem kleineren.

Da die erste Schwelle HMS1 zur Detektion eines nicht oder nur sehr gering vorhandenen Handmoments des Fahrers dient, während die zweite Schwelle HMS2 das Vorhandensein eines Lenkmoments voraussetzt, ist die zweite Schwelle größer als die erste Schwelle festzulegen. Somit ist aufgrund des Vorhandenseins eines Lenkmoments des Fahrers notwendigerweise die boolsche Variable V1 "Eins" ist, wodurch der Eingang E1 des Schalters 13 auf den Ausgang A gelegt wird. Bei einem Vorhandensein eines Lenkmoments des Fahrers wird daher mittels der zweiten Schwelle HMS2 entschieden, mit welcher Schrittweite SW2 oder SW3 der Zähler wieder hochgezählt wird.

Folgende Werte für die einzelnen Parameter haben sich bei dem oben erläuterten Verfahren bewährt:

| | | |
|---|---|---|
| Zykluszeit: | 0,2 s | (d.h. das Verfahren wird alle 0,2 s erneut durchlaufen) |
| ZWM | 600 | (maximaler Zählwert) |
| ZWG | 100 | (untere Grenze Zählwert) |
| HMS1 | 0,3 Nm | (erste Schwelle) |
| HMS2 | 0,6 Nm | (zweite Schwelle) |
| SW1 | -1 | (erste Schrittweite) |
| SW2 | 15 | (zweite Schrittweite) |
| SW3 | 160 | (dritte Schrittweite) |

Eine Zykluszeit von 0,2s bedeutet 50 Durchläufe pro Sekunden. Da in jedem Durchlauf die erste Schrittweite SW1=-1 von 600 abgezogen wird, werden also 10 Sekunden benötigt, bis die untere Grenze des Zählwertes ZWG von 100 erreicht wird.

Ein alternatives Verfahren wäre, dass anstelle der im obigen geschilderten Verwendung des gemessenen Handmoments des Fahrers die Änderung des Handmoments dHM/dt bewertet wird. Dadurch wird das System unempfindlich gegen eine konstanten Offset gegebenenfalls ist eine Filterung der Ableitung dHM/dt notwendig, um eine entsprechende Signalgüte zu erhalten.

Das Prinzip wäre in dem Fall: wenn sich das Handmoment über eine gewisse Zeit nicht, also die Ableitung klein ist, ändert, so liegt eine Freihandsituation vor.

Anstelle der oben genannten Momentgrenzen werden in der alternativen Ausführungsform Grenzen von Handmomentänderungen verwendet. Beispielsweise ist ein Wert für die erste Schwelle unterhalb welcher der Zähler abwärts zählt 0,075 Nm/s.

Diese erste Grenze kann fahrzustandsabhängig eingestellt werden und im Fall eines aktiven Reglereingriffs auf 0,3 Nm/s erhöht werden.

Allgemein können sowohl in der Version bezüglich der Handmomente als auch der Handmomentänderungen die Warngrenzen und/oder Zählerwerte und/oder Schrittweiten situationsabhängig eingestellt werden. Beispielsweise kann in Kurven früher gewarnt werden oder es können als Funktion des Kurvenradius die Warngrenzen und/oder Zählerwerte einschließlich Schrittweiten verändert werden.

Soll beispielsweise in Kurven früher gewarnt werden, so kann man die erste Schrittweite von -1 auf -2 ändern. Eine Warnung erfolgt dann bei einer Zykluszeit von 0,2s bereits bei 5s. Alternativ kann der Wert des maximalen Zählwertes von 600 auf 350 abgesenkt werden, welches auch gegebenenfalls eine frühere Warnung bewirkt.

### BEZUGSZEICHENLISTE

- 1: Elektromechanische Lenkung
- 2: Lenkrad
- 3: Fahrer
- 4: Steuergerät
- 5: Anzeige/Warneinrichtung

- 10: Betragsbildner
- 11: erster Vergleicher
- 12: zweiter Vergleicher
- 13: Schalter
- 14: Summierer
- 15: Maximumbildner
- 16: Minimumbildner
- 17: Speicher Zählerwert
- 18: Vergleicher

- HM: Handmoment des Fahrers
- HMS1: erste (untere) Schwelle
- HMS2: zweite (obere) Schwelle
- SW1: erste Schrittweite
- SW2: zweiter Schrittweite
- SW3: dritte Schrittweite
- V1: erste boolsche Variable
- V2: zweite boolsche Variable
- V3: dritte boolsche Variable
- ZWM: maximaler Zählerwert
- ZWG: unterer Grenzwert Zähler

## Patentansprüche

1. Verfahren zur Erkennung fehlender Fahreraktivität am Lenkrad eines Kraftfahrzeugs, wobei das am Lenkrad ausgeübte Handmoment des Fahrers gemessen wird, wobei das Verfahren getaktet ist und innerhalb eines Taktes vorgegebener Zyklusdauer die folgenden Schritte aufweist:
Bestimmen mindestens einer Handmomentgröße aus dem gemessenen Handmoment, Herunterzählen eines Zählers um eine vorgegebene erste Schrittweite ausgehend von dem Zählerwert des vorherigen Taktes, wenn die mindestens eine Handmomentgröße kleiner als eine vorgegebene erste Schwelle ist,
Heraufzählen des Zählers um eine zweite Schrittweite ausgehend von dem Zählerstand des vorherigen Taktes, wenn die mindestens eine Handmomentgröße größer oder
gleich der vorgegebenen Schwelle ist,
Abspeichern des neuen Zählerwertes zur Verwendung im nächsten Takt,
Vergleichen des neuen Zählerwertes mit einem Zählerschwellwert und Ausgeben einer Warnung, wenn der neue Zählerwert kleiner dem Zählerschwellwert ist, und
Ausführen des nächsten Taktes, wenn der neue Zählerwert größer oder gleich dem Zählerschwellwert ist.

2. Verfahren nach Anspruch 1, **dadurch gekennzeichnet, dass** die zweite Schrittweite eine Funktion der Handmomentgröße ist.

3. Verfahren nach Anspruch 2, **dadurch gekennzeichnet, dass** die Handmomentgröße mit einer zweiten Schwelle verglichen wird, wobei die zweite Schrittweite einen größeren Wert annimmt, wenn die Handmomentgröße größer ist als die zweite Schwelle, und einen kleineren Wert annimmt, wenn die Handmomentgröße kleiner oder gleich der zweiten Schwelle ist.

4. Verfahren nach einem der vorangegangenen Ansprüche, **dadurch gekennzeichnet, dass** der Zählerwert durch eine obere Grenze begrenzt ist.

5. Verfahren nach einem der vorangegangenen Ansprüche, **dadurch gekennzeichnet, dass** die erste und/oder zweite Schrittweite und/oder erste Schwelle und/oder obere Grenze des Zählerwerts situationsabhängig änderbar sind.

6. Verfahren nach einem der vorangegangenen Ansprüche, **dadurch gekennzeichnet, dass** die Handmomentgröße durch das gemessene Handmoment und/oder dessen zeitlicher Ableitung gebildet wird.

7. Verfahren nach Anspruch 6, **dadurch gekennzeichnet, dass** das Verfahren sowohl das auf die Betrachtung des gemessenen Handmoments als auch dessen Ableitung gerichtet ist.

8. Verfahren nach Anspruch 6 oder 7, **dadurch gekennzeichnet, dass** die zeitliche Ableitung des Handmoments einer Filterung unterzogen wird.

9. Vorrichtung zur Erkennung fehlender Fahreraktivität am Lenkrad eines Kraftfahrzeugs, wobei die Vorrichtung besonders angepasst ist, um ein Verfahren nach einem der vorangegangenen Ansprüche durchführen zu können, und die Vorrichtung mindestens einen Sensor zur Bestimmung des Lenkrad anliegenden Handmoments, eine Datenverarbeltungseinrichtung zur Durchführung des Verfahrens und eine Warneinrichtung aufweist,
**dadurch gekennzeichnet, dass**
die Datenverarbeitungsvorrichtung aufweist:
eine Einrichtung zum Bestimmen mindestens einer Handmomentgröße aus dem gemessenen Handmoment,
eine Einrichtung zum Vergleichen der Handmomentgröße mit einer vorgegebenen ersten Schwelle,
einen Zähler zum Herabzählen eines Zählerwerte um eine vorgegebene erste Schrittweite ausgehend von dem Zählerwert eines vorherigen Taktes, wenn die mindestens eine Handmomentgröße kleiner als eine vorgegebene erste Schwelle ist,
und zum Heraufzählen um eine zweite Schrittweite ausgehend von dem Zählerstand des vorherigen Taktes, wenn die mindestens eine Handmomentgröße größer oder gleich der vorgegebenen Schwelle ist,
eine Einrichtung zum Abspeichern des neuen Zählerwertes zur Verwendung im nächsten Takt,
eine Einrichtung zum Vergleichen des neuen Zählerwertes mit einem Zählerschwellwert und zum Ausgeben einer Warnung durch die Warneinrichtung, wenn der neue Zählerwert kleiner dem Zählerschwellwert ist, und
eine Einrichtung zum Ausführen des nächsten Taktes, wenn der neue Zählerwert größer oder gleich dem Zählerschwellwert ist.

10. Vorrichtung nach Anspruch 9, **dadurch gekennzeichnet, dass** die Warneinrichtung durch eine Anzeigeeinrichtung und/oder eine akustische Warneinrichtung gebildet wird.

11. Vorrichtung nach einem der Ansprüche 9 oder 10, **dadurch gekennzeichnet, dass** die Vorrichtung einen Sensor zur Bestimmung des Lenkradwinkels aufweist.

## Claims

1. Method for detecting an absence of driver activity at the steering wheel of a motor vehicle, wherein the driver's manual torque applied to the steering wheel is measured, wherein the method is clocked and has the following steps within a clock pulse of a predefined cycle duration:
determination of at least one manual torque variable from the measured manual torque,
counting down of a counter by a predefined first increment on the basis of the counter value of the previous clock pulse if the at least one manual torque variable is lower than a predefined first threshold,
counting down of the counter by a second increment starting from the counter reading of the previous clock pulse if the at least one manual torque variable is higher than or equal to the predefined threshold,
storage of the new counter value for use in the next clock pulse,
comparison of the new counter value with a counter threshold value and outputting of a warning if the new counter value is lower than the counter threshold value, and
execution of the next clock pulse if the new counter value is higher than or equal to the counter threshold value.

2. Method according to Claim 1, **characterized in that** the second increment is a function of the manual torque variable.

3. Method according to Claim 2, **characterized in that** the manual torque variable is compared with a second threshold, wherein the second increment assumes a relatively high value if the manual torque variable is higher than the second threshold, and assumes a relatively low value if the manual torque variable is lower than or equal to the second threshold.

4. Method according to one of the preceding claims, **characterized in that** the counter value is bounded by an upper limit.

5. Method according to one of the preceding claims, **characterized in that** the first and/or second increment and/or first threshold and/or upper limit of the counter value can be changed in a situation-dependent fashion.

6. Method according to one of the preceding claims, **characterized in that** the manual torque variable is formed by the measured manual torque and/or the time derivative thereof.

7. Method according to Claim 6, **characterized in that** the method is directed both at considering the measured manual torque as well as at the derivation thereof.

8. Method according to Claim 6 or 7, **characterized in that** the time derivative of the manual torque is subjected to filtering.

9. Device for detecting an absence of driver activity at the steering wheel of a motor vehicle, wherein the device is particularly adapted to be able to carry out a method according to one of the preceding claims, and the device has at least one sensor for determining the manual torque applied to the steering wheel, a data processing device for carrying out the method and a warning device,
**characterized in that**
the data processing device has:
a device for determining at least one manual torque variable from the measured manual torque,
a device for comparing the manual torque variable with a predefined first threshold,
a counter for counting down a counter value by a predefined first increment starting from the counter value of a preceding clock pulse if the at least one manual torque variable is lower than a predefined first threshold, and for counting up by a second increment starting from the counter reading of the preceding clock pulse if the at least one manual torque variable is higher than or equal to the predefined threshold,
a device for storing the new counter value for use in the next clock pulse,
a device for comparing the new counter value with a counter threshold value and for outputting a warning by means of the warning device if the new counter value is lower than the counter threshold value, and
a device for executing the next clock pulse if the new counter value is higher than or equal to the counter threshold value.

10. Device according to Claim 9, **characterized in that** the warning device is formed by a display device and/or an acoustic warning device.

11. Device according to one of Claims 9 or 10, **characterized in that** the device has a sensor for determining the steering wheel angle.

## Revendications

1. Procédé de reconnaissance d'une activité manquante du conducteur sur le volant de direction d'un véhicule automobile, le couple manuel du conducteur exercé sur le volant de direction étant mesuré, le procédé étant cadencé et présentant les étapes suivantes à l'intérieur d'une cadence de durée de cycle prédéfinie :
détermination d'au moins une grandeur de couple manuel à partir du couple manuel mesuré ;
décompte au compteur d'un premier incrément prédéfini à partir de la valeur de compteur de la cadence précédente lorsque l'au moins une grandeur de couple manuel est inférieure à un premier seuil prédéfini ;
rajout au compteur d'un deuxième incrément à partir de l'état de compteur de la cadence précédente lorsque l'au moins une grandeur de couple manuel est supérieure ou égale au seuil prédéfini ;
mémorisation de la nouvelle valeur de compteur à réutiliser pour la cadence suivante ;
comparaison de la nouvelle valeur de compteur avec une valeur seuil de compteur et envoi d'un avertissement lorsque la nouvelle valeur de compteur est inférieure à la valeur seuil de compteur et mise en place de la cadence suivante lorsque la valeur de compteur est supérieure ou égale à la valeur seuil de compteur.

2. Procédé selon la revendication 1, **caractérisé en ce que** le deuxième incrément est fonction de la grandeur de couple manuel.

3. Procédé selon la revendication 2, **caractérisé en ce que** la grandeur de couple manuel est comparée à un deuxième seuil, le deuxième incrément prenant une valeur plus grande lorsque la grandeur de couple manuel est supérieure au deuxième seuil et prenant une valeur plus petite lorsque la grandeur de couple manuel est inférieure ou égale au deuxième seuil.

4. Procédé selon l'une quelconque des revendications précédentes, **caractérisé en ce que** la valeur de compteur est limitée par une limite supérieure.

5. Procédé selon l'une quelconque des revendications précédentes, **caractérisé en ce que** le premier et/ou le deuxième incrément et/ou le premier seuil et/ou la limite supérieure de la valeur de compteur peuvent varier en fonction de la situation.

6. Procédé selon l'une quelconque des revendications précédentes, **caractérisé en ce que** la grandeur de couple manuel est formée par le couple manuel mesuré et/ou sa dérivée dans le temps.

7. Procédé selon la revendication 6, **caractérisé en ce que** le procédé est orienté tant vers la prise en compte du couple manuel mesuré que de sa dérivée.

8. Procédé selon la revendication 6 ou 7, **caractérisé en ce que** la dérivée dans le temps du couple manuel est soumise à un filtrage.

9. Dispositif de reconnaissance d'une activité manquante du conducteur sur le volant de direction d'un véhicule automobile, le dispositif étant particulièrement adapté pour permettre de mettre en oeuvre un procédé selon l'une quelconque des revendications précédentes et le dispositif comportant au moins un capteur permettant de déterminer le couple manuel sur le volant de direction ainsi qu'un dispositif de traitement de données permettant de mettre en oeuvre le procédé et un dispositif d'avertissement ;
**caractérisé en ce que** le dispositif de traitement de données comporte :
un dispositif de détermination d'au moins une grandeur de couple manuel à partir du couple manuel mesuré ;
un dispositif de comparaison de la grandeur de couple manuel avec un premier seuil prédéfini ;
un compteur pour décompter un premier incrément prédéfini à partir de la valeur de compteur d'une cadence précédente lorsque l'au moins une grandeur de couple manuel est inférieure à un premier seuil prédéfini et pour rajouter un deuxième incrément à partir de l'état de compteur de la cadence précédente lorsque l'au moins une grandeur de couple manuel est supérieure ou égale au seuil prédéfini ;
un dispositif de mémorisation de la nouvelle valeur de compteur à réutiliser pour la cadence suivante ;
un dispositif de comparaison de la nouvelle valeur de compteur avec une valeur seuil de compteur et envoi d'un avertissement par le biais du dispositif d'avertissement lorsque la nouvelle valeur de compteur est inférieure à la valeur seuil de compteur ; et
un dispositif de mise en place de la cadence suivante lorsque la nouvelle valeur de compteur est supérieure ou égale à la valeur seuil de compteur.

10. Dispositif selon la revendication 9, **caractérisé en ce que** le dispositif d'avertissement est constitué par un dispositif d'affichage et/ou un dispositif d'avertissement sonore.

11. Dispositif selon l'une quelconque des revendications 9 ou 10, **caractérisé en ce que** le dispositif comporte un capteur permettant de déterminer l'angle du volant de direction.
